Europäisches Patentamt

European Patent Office

Office européen des brevets

(11) Publication number: **0 216 700**
**A2**

## EUROPEAN PATENT APPLICATION

(21) Application number: **86402028.4**

(22) Date of filing: **17.09.86**

(51) Int. Cl.⁴: **G 06 F 15/347**

(30) Priority: **19.09.85 JP 207502/85**

(43) Date of publication of application:
**01.04.87 Bulletin 87/14**

(84) Designated Contracting States: **DE FR GB**

(71) Applicant: **FUJITSU LIMITED**
**1015, Kamikodanaka Nakahara-ku**
**Kawasaki-shi Kanagawa 211 (JP)**

(72) Inventor: **Yoshida, Akira**
**210, 1-23-10, Saginuma, Miyamae-ku**
**Kawasaki-shi Kanagawa 213 (JP)**

**Sasaki, Yuuichi Baron Haitsu Futakotamagawaen2-101**
**168-41, Suwa, Takatsu-ku**
**Kawasaki-shi Kanagawa 213 (JP)**

(74) Representative: **Descourtieux, Philippe et al**
**CABINET BEAU de LOMENIE 55 rue d'Amsterdam**
**F-75008 Paris (FR)**

(54) System for generating mask pattern for vector data processor.

(57) A system for generating a mask pattern for a vector data processor having at least a mask register and a vector register in which, when the value of the mask register is "1", a calculation is executed for the corresponding element of the vector register, and when the value of the mask register is "0", a calculation is not executed, in accordance with the so-called calculational mask function. The system includes a designation unit for designating sequential i elements of "0" or "1" from the head element of the mask register and the subsequent sequential j elements of "1" or "0", and a control unit for rendering the i elements to be "0" or "1", the j elements to be "1" or "0", and the remaining entire elements to be all "0's" or all 1's, when "i" plus "j" is smaller than a vector length which is the object of calculation of a vector data operand for use in a vector instruction, and a desired mask pattern of "0" or "1" is able to be generated in the mask register.

Fig. 7

**Description**

## SYSTEM FOR GENERATING MASK PATTERN FOR VECTOR DATA PROCESSOR

### BACKGROUND OF THE INVENTION

#### I. Field of The Invention

The present invention relates to a system for generating a mask pattern for a mask register (MR) in a vector data processing apparatus, for use in a supercomputer, having a calculational mask function by means of the mask register.

#### 2. Description of the Related Art

In recent years, with the increased use of vector processors (VP), that is, supercomputers, vector processors (VP) actually operate in the fields of fast Fourier transformation (FFT) in radio astronomy or image processing and a performance evaluation of the application programs and other can be carried out.

As a result, the bottlenecks in the vector data processing are becoming known. As one such, it is now obvious that the generating capability of a mask pattern of the so-called mask calculation by dint of the mask operand, conspicuously enhances the processing capability of the vector processor, and thus the development of a system for generating the mask pattern with a high efficiency has long been desired.

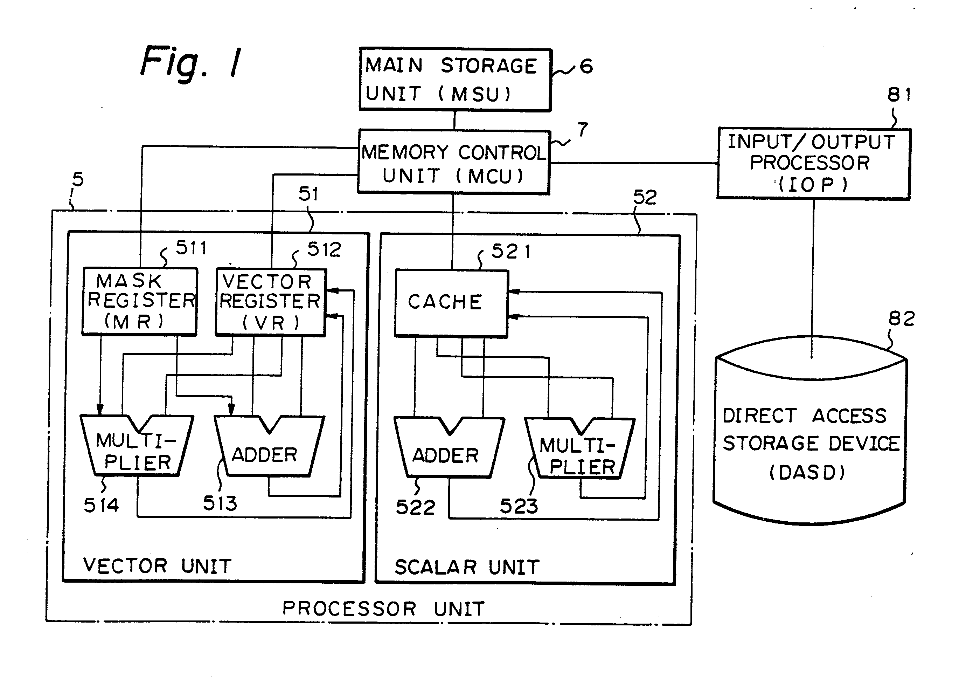

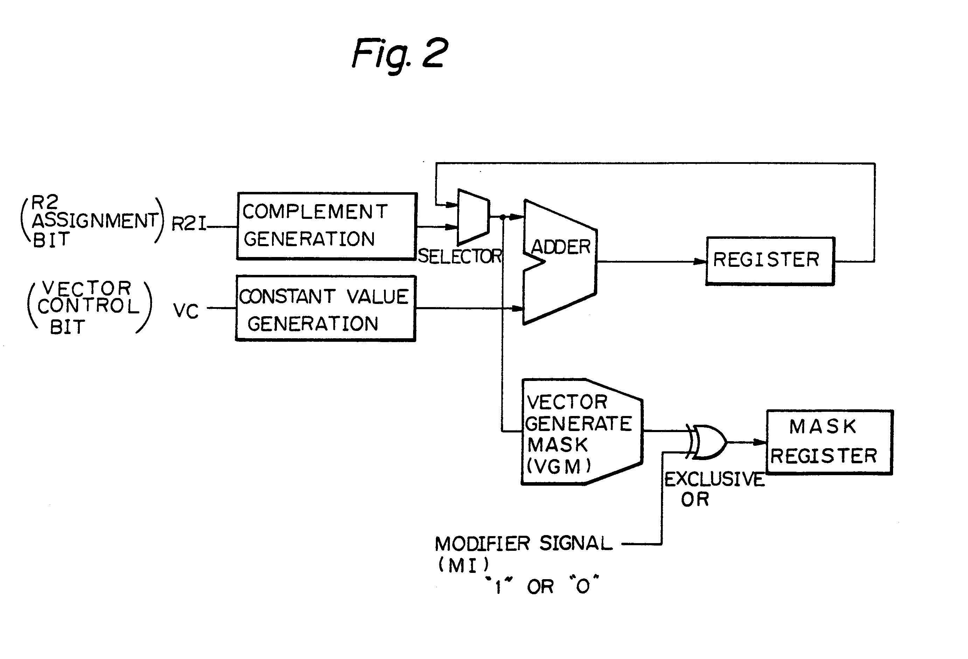

A prior art mask pattern generation system will be described with reference to Fig. 2.

In the prior art, a mask pattern generation instruction (hereinafter, referred to as VGM) can not make a mask pattern such that only a specified element of a mask register (MR) is "I" or "0" and the other elements are all "0" or all "I".

That is, when the VGM instruction is executed, the value at the R2 portion of the instruction (hereinafter, referred to as R2I) is input to an adder 3, after a complement representation of I is obtained by a complement number generating circuit (COMP) I.

A definite number, for example, "I" from a constant circuit (CNST) 2 and a complement of I in the above-mentioned R2I are added, so a definite number "I" is subtracted from said R2I. Then, the output of a decoder (VGM) 4 and a modifier (MI) designated by said VGM instruction execute an exclusive OR operation in an exclusive OR circuit XOR, to store the result in the head element of mask registor (MR) which is assigned by the VGM instruction.

That is to say, if the above-described modifier (MI) is "0", "000---0" is stored, while if the modifier MI is "I", the system functions so that "III---I" is stored.

When the above-described subtraction result is "0", the output of said decoder (VGM) 4 is "I", and "I" or "0" is stored in the element of the mask register MR assigned at that time, according to the value of the modifier MI.

Therefore, the output of the decoder VGM is "0", and functions so that "000---0" or "III---I" is stored into the mask register MR till the vector length (VL).

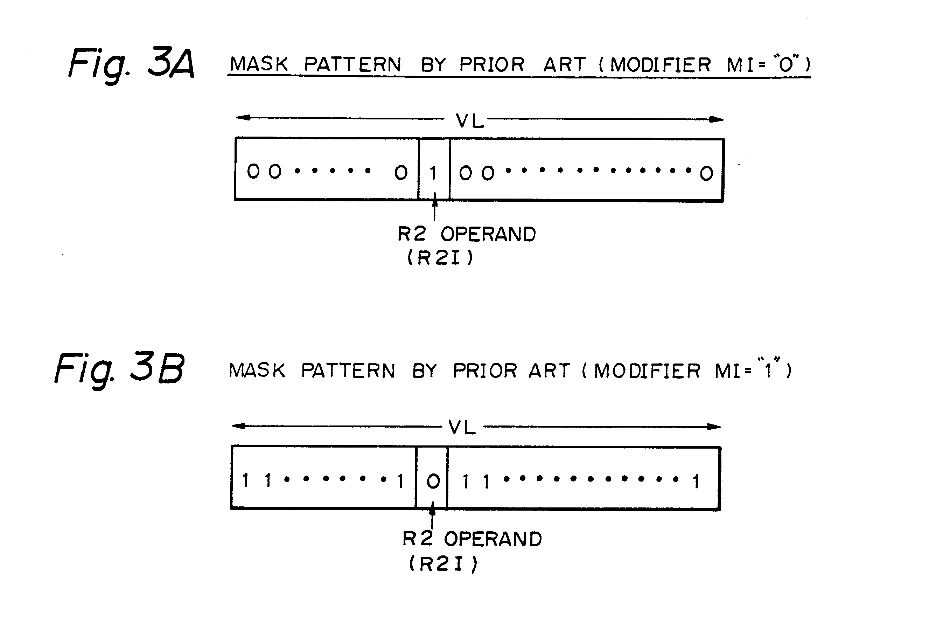

The example of a mask pattern so generated is shown in Figs. 3A and 3B.

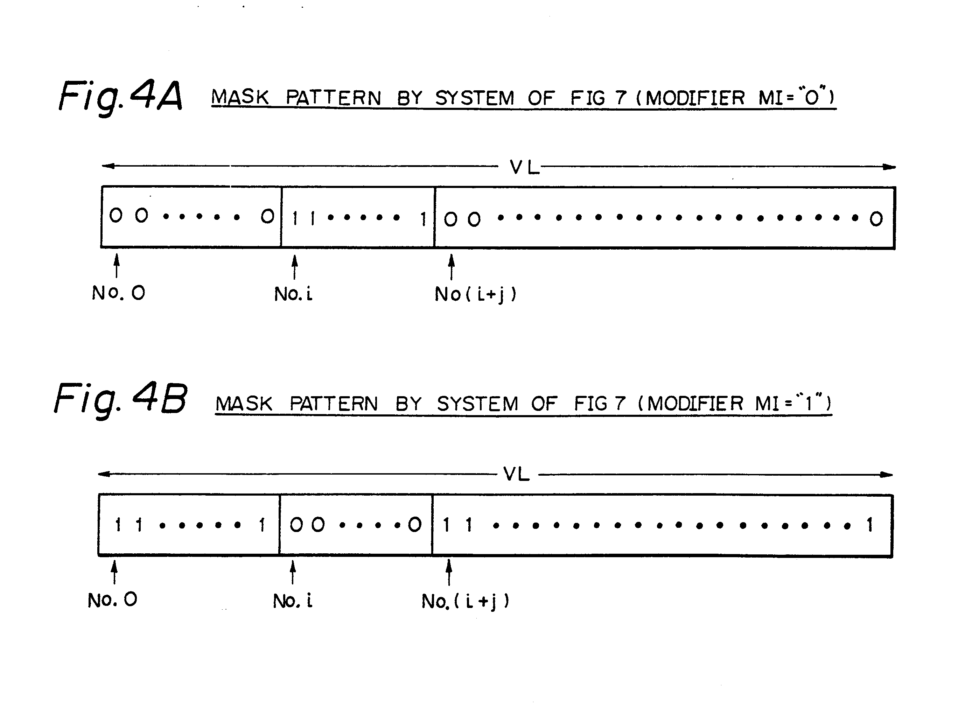

Therefore, in order to generate a mask pattern which is necessary to the vector operation as shown in Figs. 4A and 4B, first, a plurality of vector instructions and scalar instructions were necessary, and second, mask pattern is stored in the memory in advance and must be loaded into the mask register (MR) from said memory every time it is needed.

When such a pattern is generated owing to the vector instruction of the above-mentioned first point. for example, the following object program is created and executed.

    (i) L GRI = I
    (ii) L GR2 = i
    (iii) L GR3 = j
    (iv) VGS VRI, GRI
    (v) VCS* MRI, GR2, VRI
    (vi) VCS* MR2, GR3, VRI
    (vii) VNM MR3, MR2, MRI

In the above-described program, the first three load instructions (i) to (iii), GRI = I, GR2 = i, and GR3 = j are set to a respective general-purpose register GR.

The next vector generation series (VGS) instruction (IV) creates an arithmetical progression which represents the content (in this example "I") of the general-purpose register (GRI) in the vector register (VRI). That is, in this example, a progression
VRI: I, 2, 3, 4, ---, VL
is stored therein.

In the following vector comparison scalar (VCS*) instruction (v), a content of GR2 and VRI, which was created by the above-mentioned instruction, is compared and then, if
GR2 < VRI,
"I" is introduced into a respective element of a corresponding mask register (MR). This is expressed as follows:
MRI; 000---0IIII---I (From the i-th element converted to "I")

Similarly, in the vector comparison scalar (VCS*) instruction (vi), a content of GR3 and VRI, which is created by the above-mentioned instruction, is compared and then, if
GR3 > VRI,
"I" is introduced into a respective element of the corresponding mask register (MR). This is expressed as follows:
MR2: III---I0000---0 (From the j-th element, converted to "0")

In the last vector and mask (VNM) instruction (vii), taking the logical product of a mask register MRI amd MR2, the product is stored in a mask register (MR3).

As a result, the following bit pattern is obtained in a mask register (MR3). That is,
MR3; 000---0III---I000---0
(From the i-th element to the j-th minus I element, equal to "I")

Therefore, in the case where a mask pattern in which a plurality of "I" or "0" are placed between "0" or "I" is generated in accordance with a vector instruction, there is a problem that the overhead is increased.

According to the above-mentioned second point, since only the mask pattern stored in a memory in advance can be used, there is a problem that the desired mask pattern can not be obtained each time of the processings of the program.

SUMMARY OF THE INVENTION

It is an object of the present invention to provide an improved system for generating a mask pattern for a vector data processor having a mask register and a vector register in which the increase of the overhead is prevented, and a desired repetitive pattern can be formed in the mask register when such repetitive pattern is needed.

According to the fundamental aspect of the present invention, there is provided a system for generating a mask pattern for a vector data processor having a mask register and a vector register in which, when the value of the mask register is "I", a calculation is executed for the corresponding element of the vector register, and when the value of the mask register is "0", a calculation is not executed, in accordance with the so-called calculational mask function, the system comprising:
designation means for designating sequential "i" elements of "0" or "I" from the beginning element of the mask register and the subsequent sequential "j" elements of "I" or "0"; and
control means for rendering the "i" elements to be "0" or "I", the "j" elements to be "I" or "0", and the remaining entire elements to be all "0's" or all "I's", when "i" plus "j" is smaller than a vector length VL which is the object of calculation of a vector data operand used in a vector instruction;
a desired mask pattern of "0" or "I" being able to be generated on the mask register.

Moreover, according to another aspect of the present invention, there is provided a system for generating a mask pattern for a vector data processor having a mask register and a vector register in which, when the value of the mask register is "I", a calculation is executed for the corresponding element of the vector register, and when the value of the mask register is "0", a calculation is not executed, in accordance with the so-called calculational mask function, the system comprising:
designation means for designating sequential "i" elements of "0" or "I" from the beginning element of the mask register and the subsequent sequential "j" elements of "I" or "0"; and
control means for instructing the repeat "i" elements of "0" or "I" and "j" elements of "I" or "0" until a vector length which is the object of calculation of a vector data operand used in a vector instruction is attained, when "i" plus "j" is smaller than the above-mentioned vector length;
desired mask patterns including repetitive patterns being able to be generated in the mask register.

The means for solving the problems according to the present invention will be described hereinafter with reference to the figures.

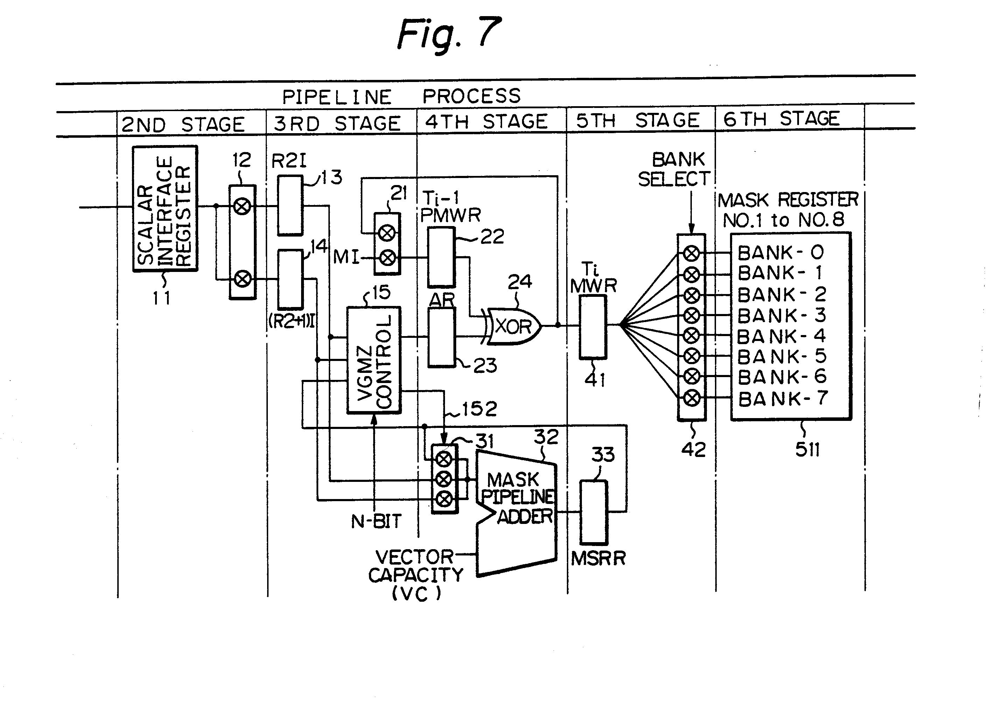

Figure 7 is a block diagram showing an embodiment in accordance with the present invention:
In the present invention, there is provided an instruction means for generating a mask pattern with a vector period or specified means therefore, wherein sequential i elements of "0" or "I" are stored in a head element of a mask register MR, then successively, the sequential j elements of "I" or "0" are stored and the remaining entire elements of all "0" or all "I" are stored, or in order to generate a mask pattern which repeats the above-mentioned (i + j) elements of "0" or "I" combination pattern until a vector length is attained the instruction means for generating a mask pattern for vector periods (hereinafter referred to as VGMZ) or other means is provided.

There is provided a register (R2I) I3 which, after executing the instruction, sets the i contents of R2 portion in the above-mentioned instruction, a register {(R2+I)I} I4 which sets the j contents of the R2 portion plus I in the above-mentioned instruction, a register (AR) 23 which, when at the starting time of execution of the above-described VGMZ instruction, is "0" and then when the VGMZ control portion I5 detects the later event variation, inverts the initial value, and a register (PMWR) 22 which, after the modifier portion MI of the VGMZ instruction has been initialized, the setting of the output of exclusive OR circuit (XOR) 24 is repeated.

First, with regard to the content (designating the i elements as described before) of the afore-mentioned register (R2I) I3, as the system is subtracting a constant value (VC), for example, "I" by a mask pipeline adder (MP ADDER) 32, the output value of the exclusive OR circuit (XOR) 24 between the register (AR) 23 and the register (PMWR) 22 is stored from the head element of the mask register (MR) in sequence through the register (MWR) 4I.

When the value of the above-mentioned mask pipeline adder (MP ADDER) 32 is "0", that is, the i elements designated by the register (R2I) I3 are detected, the VGMZ control portion I5 recognizes that an event variation has occurred and sets the aforementioned register (AR) 23 to "I" and the calculation of an exclusive OR is carried out by the register (PMWR) 22 and the exclusive OR circuit (XOR) 24, and the system functions to store "I" in the corresponding elements of the mask register (MR).

As a result, if the value of the above-mentioned modifier (MI) portion is "0", the i elements of "0" are stored in the mask register (MR), and "I" is stored in the (i+I)-th element.

Hereafter, the content (designating the above-mentioned j elements) of the register {(R2+I)I} I4 is input into the mask pipeline adder (MP ADDER) 32, and as a result of the same subtraction processing, the system is so constituted that i elements of "0" and j elements of "I" are stored in the mask register (MR).

Moreover, as the occasion demands, gate means 3I will be provided for repeating the above-mentioned (i + j) elements of 0/I pattern as a fundamental pattern till the vector length (VL).

The mode of operation in accordance with the present invention will be now described in detail.

In the vector data processor having at least a mask register (MR) and a vector register (VR) to enable executing the so-called calculation mask function in which, when the value of the mask register (MR) is "I" responsive to a respective element of the vector register (VR), a calculation is executed for the corresponding element of the vector register (VR), while when the value of the mask register is "0", a calculation is not executed, there is provided an instruction means for generating a mask periodic pattern for a vector (VGMZ) or other means, wherein in the mask register MR which a first operand RI of said instruction designates, "0" is written into the elements A of the element number 0 to the numbers denoted by the second operand R2 minus I, while "I" is written into the elements B of the element number denoted by the second operand R2 to 'the number denoted by the operand of the second operand R2 plus I' minus I, and further, the mask pattern is generated repetitively as long as the elements denoted by, for example, the vector length (VL), are regarded as the sum $(A + B)$ as a period.

As a result, it is effective if the instruction or means for generating a periodic pattern of a vector is only executed or activated, and an arbitrary repetitive pattern can be created on a mask register.

BRIEF DESCRIPTION OF THE DRAWINGS

Figure I is a schematic block diagram of a vector data processing apparatus to which the present invention is to be applied;

Fig. 2 is a view showing a system for generating a mask pattern in the prior art;

Figs. 3A and 3B show an example of mask pattern in the prior art;

Figs. 4A and 4B show an example of mask pattern necessary for vector operation II according to the present invention;

Fig. 5 shows a format of instruction of a vector generates mask according to the present invention;

Fig. 6 shows a pattern to be stored into a mask register; and

Fig. 7 is a block diagram of a vector data processing apparatus according to an embodiment of the present invention.

DESCRIPTION OF THE PREFERRED EMBODIMENTS

Figure I is a schematic block diagram of a vector data processing apparatus to which the present invention is to be applied.

The vector data processing apparatus is composed of a mainstorage unit "MSU" 6, a memory control unit "MCU" 7, a processor unit 5, an input/output processor "IOP" 8I and a direct access storage device "DASD" 82.

The processor unit 5 is composed of a vector unit 5I and a scalar unit 52. And the vector unit 5I is composed of a mask register "MR" 5II connected to the memory control unit 7, a vector register "VR" 5I2 connected also to the memory control unit 7, an adder 5I3 which receives two outputs of the vector register 5I2 and the output of addition is delivered to

the vector register 5I2 and a multiplier 5I4 which receives two outputs of the vector register 5I2 and the output of multiplication is delivered to the vector register 5I2. The scalar unit 52 is composed of a cache 5I2 which means a unit of fast coordinate-addressable storage to hold data with high access probability, an adder 522 which receives two outputs of the cache 52I and the output of addition is returned to the cache 52I and a multiplier 523 which receives two outputs of the cache 52I and the output of multiplication is returned to the cache 52I.

Figure 7 is a block diagram of a vector data processing apparatus according to an embodiment of the present invention. Functional blocks requisite for executing the present invention are a VGMZ control portion I5, a Register (AR) 23, a Register (PMWR) 22, amd an Exclusive OR circuit (XOR) 24.

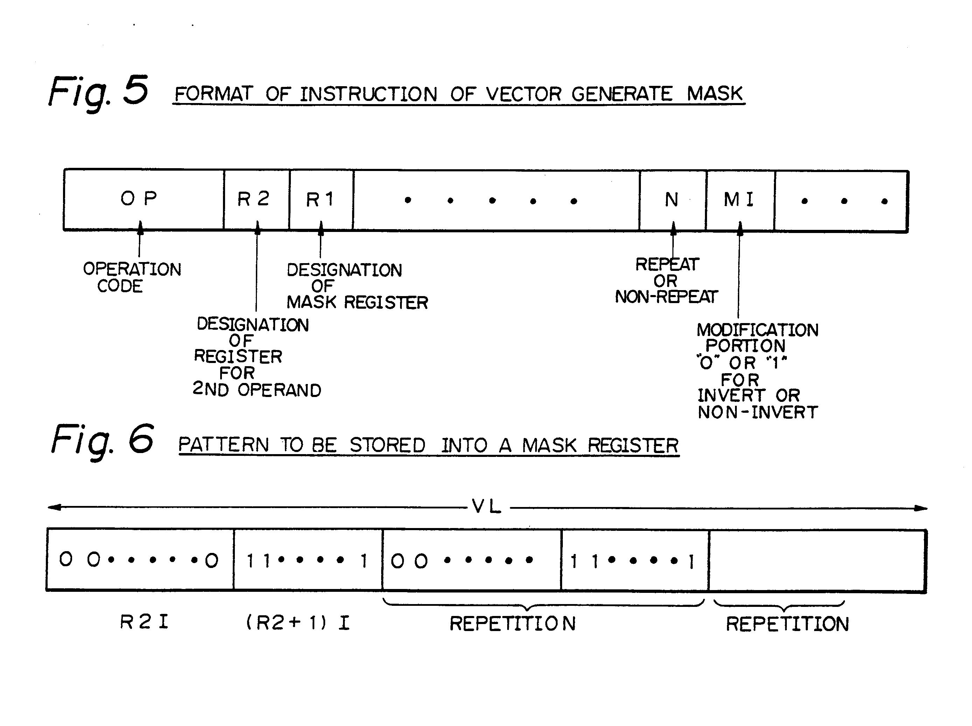

An example of a format of an instruction for generating a periodical mask pattern necessary for the present invention will be designated in Figure 5. Due to this VGMZ instruction, a plurality of "0"s are stored in a mask register MR denoted by the RI portion from the head element to the element number minus I shown by a general-purpose register denoted by the R2 portion while a plurality of "I"s are stored therein from the element code shown by the general-purpose register denote by the R2 portion, to the element code minus I shown by the general-purpose register denoted by (R2+I).

When the bit of the portion "N" according to the format of Fig. 2 is "0", a sequence of "0" is stored up to the end of the vector length (VL) after the above-mentioned bit pattern, and when the bit of the portion "N" according to the format of Fig. 5 is "I", the repetitions of the above-mentioned bit pattern from the element code "0" are carried out up to the end of the vector length (VL) after the above-mentioned bit pattern.

Then, when the bit of the portion "MI" is "ON", the element negating each bit of the above-mentioned operand is stored in the mask register MR designated by the portion "RI".

A definite circuit when the function which the above-mentioned instruction "VGMZ" designates is implemented, is shown by the above-described Figure 7 and is operated by a pipe-line system.

In Fig. 7, the case when the modifier portion MI is "0" is described.

At the No. 3 stage of the pipe-line, the content of the general-purpose register designated by the above-mentioned portion "R2" and the content of the general-purpose register designated by the portion "R2+I" are set in a register "R2I" I3 and a register "(R2+I)I" I4, respectively and as well as in the VGMZ control portion I5, a register "AR" 23 is set to "0". Then, the value of the above-mentioned MI portion is set to a register PMWR 22 by means of a start bit not shown in the figure, to initialize the registers R2I, (R2+I)I and PMWR.

At the next No. 4 stage, an exclusive OR value of the content of the above-mentioned register "AR" 23 and of the content of the register "PMWR" 22 is calculated by an exclusive OR (hereinafter referred to as XOR) circuit 24 and the result is fed back to an input gate 2I of register "PMWR" 22 and is set to the register "PMWR" 22. That is, when the register "PMWR" 22 starts executing the instruction, after initialization by the above-mentioned MI portion, the register "PMWR" functions to always hold the content of exclusive OR circuit 24.

At the fifth stage, the output of the above-mentioned XOR circuit 24 is set to a register "MWR" 4l, and at the sixth stage, is stored in a mask register "MR" designated by the RI portion.

Until the event variation from the "VGMZ" control portion I5 is output, the above-mentioned operation is repeated. That is to say, a sequence of "0" is stored continuously into the mask register "MR".

On the other hand, in a mask pipeline adder "MPA" 32, a register "R2I" I3 is, at first, selected through a control line I52 from the VGMZ control portion I5 and every time the above-mentioned fourth stage and fifth stage are repeated, when a definite number "VC" is subtracted from the content of the register "R2I" I3 to be "0", the above-mentioned VGMZ control portion I5 detects it and recognizes that an event variation has occurred. Consequently, the above-described register "AR" 23 is set to "I", then at the next equivalent stage, the register "AR" 23 operates to return to "0" again.

As a result, the exclusive OR "XOR" circuit 24 comes to output "0" → "I" and "I" is stored in the mask register "MR" and also is fed back to an input gate 2l of the register "PMWR" 22 to set the content of the register "PMWR" 22 to "I".

In the mask pipeline adder 32, it functions to subtract the above-mentioned constant "VC" from the content of the register "(R2+I)I" I4. Since the register "AR" 23 remains at a state of "0" until the result of the subtraction operation is again "0", "I" keeps storing in the mask register "MR" as mentioned above. Further on, "0" is output in the mask pipeline adder 32, the VGMZ control portion I5 detects the signal again to recognize the event variation and the register "AR" 23 is set to "I", so the exclusive OR circuit "XOR" 24 becomes "I" → "0", and when the register "PMWR" 22 is set to "0", "XOR" returns to the initial state.

After the above-mentioned operation, into the locations of from the element code 0 to 'the element code designated by the register "R2I" I3' minus I, that is, (i-I) in the mask register MR, a sequence of "0"'s are stored and, further, into the locations of the next element code, that is, i to 'the element code designated by the regisier "(R2+I)I" I4' minus I, that is, (i+j-I), a sequence of "I"'s are stored.

In this case, if the above-mentioned N portion is "I", the VGMZ control portion I5 detects that the N portion of the instruction is "I" and with reference to both the register "R2I" I3 and the register "(R2+I)I" I4, an output gate 3l of the mask pipeline adder 32 is controlled via a control line I52 and the VGMZ control portion I5 operates so that the same operation as the above-mentioned may be repeated for the vector length (VL), so the repetitive pattern as shown in Fig. 6 is stored in the mask register "MR".

If the element numbers shown by the register "R2I" I3 and the register "(R2+I)I I4 are longer than the vector length (VL), the processing of exceptional events such as error processing is carried out.

If the MI portion is "I" in the above-mentioned operation, the pattern which negates the above-mentioned pattern is stored in the mask register MR.

A feature of the present invention is that a sequence of "0" or "I" are stored at the location of the head element of the mask register to the element number shown by the general-purpose register designated by the R2 portion minus I' and a sequence of "I" or "0" are stored at the location of the next element to 'the element number shown by the general-purpose register designated by the R2 portion plus I' minus I, is repeated, for instance, for the vector length (VL), to generate a mask pattern.

In the aforementioned embodiment, an example is explained wherein the element number subtracted by the mask pattern adder is designated by both a register "R2I" I3 (i-th element is designated) and a register "(R2+I)I" I4 (j-th element is designated). Generally, it is thus obvious that by setting n designated registers, a 0/I pattern such as

"0" of i-th element + "I" of j-th element + "0" of the k-th element + ---

is generated, all the remaining elements are made "0" or "I", or such a mask pattern can be generated that the above-mentioned 0/I pattern is repeated for the vector length (VL) as a fundamental pattern.

In the above-mentioned example, a field "N" which designates to the VGMZ instruction that a specified fundamental pattern should be repeated until the end of the vector length (VL), is provided and accordingly, the VGMZ instruction may be provided without the field N.

In this case, the above-mentioned fundamental pattern is not repeated until the vector length (VL), so it is concluded that the all "0"'s or all "I"'s are stored in the location of all the remaining elements.

The mask pattern generating system in accordance with the present invention can be applied even when the inverting pattern will be used in place of the aforementioned fundamental pattern.

## Claims

I. A system for generating a mask pattern for a vector data processor having a mask register and a vector register in which, when the value of the mask register is "I", a calculation is executed for the corresponding element of the vector register, and when the value of the mask register is "0", a calculation is not executed, in accordance with the so-called calculational mask function,

said system comprising:

designation means for designating sequential "i" elements of "0" or "I" from the beginning element of the mask register and the subsequent sequential "j" elements of "I" or "0"; and

control means for rendering the "i" elements to be "0" or "I", the "j" elements to be "I" or "0", and the remaining entire elements to be all "0's" or all "I's", when "i" plus "j" is smaller than a vector length which is the object of calculation of a vector data operand used in a vector instruction;

a desired mask pattern of "0" or "l" being able to be generated in said mask register.

2. A system according to claim I, wherein the generation of a mask pattern is carried out by designating the number ($N_l$, $N_2$, ---$N_i$) of elements and by rendering bit sequence of the summed number ($N_l + N_2 + $---$N_i$) of elements where "0" or "l", or "l" or "0" is repeated to be a basic pattern and the remainder entire elements to be a pattern of all "0" or all "l" in correspondence with respective number of elements, and accordingly, a desired mask pattern of "0" or "l" is generated in said mask register.

3. A system for generating a mask pattern for a vector data processing apparatus having a mask register and a vector register in which, when the value of the mask register is "l", a calculation is executed for the corresponding element of the vector register, and when the value of the mask register is "0", a calculation is not executed, in accordance with the so-called calculational mask function,

said system comprising:

designation means for designating

sequential "i" elements of "0" or "l" from the beginning element of the mask register and the subsequent sequential "j" elements of "l" or "0"; and

control means for instructing to repeat "i" elements of "0" or "l" and "j" elements of "l" or "0" until aa vector length which is the object of calculation of a vector data operand used in a vector instruction is attained, when "i" plus "j" is smaller than the above-mentioned vector length;

desired mask patterns including repetitive patterns being able to be generated in said mask register.

4. A system according to claim I, wherein the generation of a mask pattern is carried out by designating the number ($N_l$, $N_2$, ---$N_i$) of elements, rendering bit sequence of the summed number ($N_l + N_2 + $---$N_i$) of elements where "0" or "l", or "l" or "0" is repeated to be a basic pattern, and instructing to repeat the basic pattern until a vector length which is the object of calculation of vector data operand is attained, and accordingly, a desired mask patterns including repetitive patterns being able to be generated in said mask register.

Fig. 1

MAIN STORAGE UNIT (MSU) ~6

MEMORY CONTROL UNIT (MCU) ~7

INPUT/OUTPUT PROCESSOR (IOP) — 81

PROCESSOR UNIT — 5

VECTOR UNIT — 51

MASK REGISTER (MR) — 511

VECTOR REGISTER (VR) — 512

MULTI-PLIER — 514

ADDER — 513

SCALAR UNIT — 52

CACHE — 521

ADDER — 522

MULTI-PLIER — 523

DIRECT ACCESS STORAGE DEVICE (DASD) — 82

864C2028 4

# Fig. 2

$\begin{pmatrix} \text{R2} \\ \text{ASSIGNMENT} \\ \text{BIT} \end{pmatrix}$ R2I —— COMPLEMENT GENERATION

$\begin{pmatrix} \text{VECTOR} \\ \text{CONTROL} \\ \text{BIT} \end{pmatrix}$ VC —— CONSTANT VALUE GENERATION

SELECTOR

ADDER

REGISTER

VECTOR GENERATE MASK (VGM)

EXCLUSIVE OR

MASK REGISTER

MODIFIER SIGNAL (MI) "1" OR "0"

8640 2028 4

## Fig. 3A  MASK PATTERN BY PRIOR ART (MODIFIER MI="0")

$$\longleftarrow \text{VL} \longrightarrow$$

| 0 0 · · · · · · 0 | 1 | 0 0 · · · · · · · · · · · 0 |

R2 OPERAND
(R2I)

## Fig. 3B  MASK PATTERN BY PRIOR ART (MODIFIER MI="1")

$$\longleftarrow \text{VL} \longrightarrow$$

| 1 1 · · · · · · 1 | 0 | 1 1 · · · · · · · · · · 1 |

R2 OPERAND
(R2I)

## Fig. 4A  MASK PATTERN BY SYSTEM OF FIG 7 (MODIFIER MI="0")

## Fig. 4B  MASK PATTERN BY SYSTEM OF FIG 7 (MODIFIER MI="1")

## Fig. 5 FORMAT OF INSTRUCTION OF VECTOR GENERATE MASK

| O P | R 2 | R 1 | • • • • • • | N | M I | • • • |

OPERATION CODE

DESIGNATION OF REGISTER FOR 2ND OPERAND

DESIGNATION OF MASK REGISTER

REPEAT OR NON-REPEAT

MODIFICATION PORTION "O" OR "1" FOR INVERT OR NON-INVERT

## Fig. 6 PATTERN TO BE STORED INTO A MASK REGISTER

←————————————— V L —————————————→

| O O • • • • • O | 1 1 • • • • 1 | O O • • • • • • | 1 1 • • • • 1 | |

R 2 I

(R2 + 1) I

REPETITION

REPETITION

# Fig. 7

PIPELINE PROCESS

| 2ND STAGE | 3RD STAGE | 4TH STAGE | 5TH STAGE | 6TH STAGE |
|-----------|-----------|-----------|-----------|-----------|

SCALAR INTERFACE REGISTER 11

12

R2I 13

14 (R2+1)I

21 MI

$T_{i-1}$ PMWR 22

AR 23

24 XOR

15 VGMZ CONTROL

152

N-BIT

31

32 MASK PIPELINE ADDER

VECTOR CAPACITY (VC)

33 MSRR

$T_i$ MWR 41

BANK SELECT

42

MASK REGISTER NO.1 to NO.8

BANK-0
BANK-1
BANK-2
BANK-3
BANK-4
BANK-5
BANK-6
BANK-7

511